(19) **Europäisches Patentamt European Patent Office Office européen des brevets**

(11) **EP 4 704 060 A1**

(12) **EUROPEAN PATENT APPLICATION**

(43) Date of publication:
04.03.2026 Bulletin 2026/10

(21) Application number: 25196165.2

(22) Date of filing: 15.08.2025

(51) International Patent Classification (IPC):
*G08B 25/14* (2006.01)     *G08B 29/18* (2006.01)
*G08B 25/00* (2006.01)

(52) Cooperative Patent Classification (CPC):
**G08B 29/186; G08B 25/14;** G08B 25/008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.09.2024  US 202418823129**

(71) Applicant: **Honeywell International Inc.
Charlotte, NC 28202 (US)**

(72) Inventors:
• **GANESAN, Balamurugan
Charlotte, 28202 (US)**
• **S, Ruban
Charlotte, 28202 (US)**
• **PARAMASIVAM, Venkatesh
Charlotte, 28202 (US)**

(74) Representative: **Haseltine Lake Kempner LLP
Cheapside House
138 Cheapside
London EC2V 6BJ (GB)**

(54) **USING GENERATIVE ARTIFICIAL INTELLIGENCE TO SUMMARIZE OPERATIONAL CHARACTERISTICS OF A SECURITY SYSTEM**

(57)     One or more summarized operational characteristics of a security system may be determined based at least in part on two or more log entries captured in one or more event logs of the security system. A natural language query from a user requesting one or more summarized operational characteristics of the security system may be submitted to a Generative Artificial Intelligence (Gen-AI) model. The Gen-AI model identifies two or more log entries captured in the one or more event logs that are relevant to calculating the one or more summarized operational characteristics of the security system and calculates the one or more summarized operational characteristics of the security system based at least in part on the identified two or more log entries. A summary is provided that includes the one or more summarized operational characteristics of the security system to the user.

FIG. 1

**Description**

TECHNICAL FIELD

The present disclosure relates generally to security systems. More particularly, the present disclosure relates to using generative artificial intelligence to summarize one or more operational characteristics of a security system.

BACKGROUND

Security systems can include a large number of components including, for example, access control card readers, door contact sensors, door lock actuators, security panels, intrusion sensors such as motion sensors and glass break sensors, surveillance cameras and/or other security system components. Events that are detected by the various components of the security system are often logged in one or more event logs. For example, intrusion events may be logged in an intrusion event log, access events (e.g. card swipes) may be logged in an access event log, video analytics events detected by a video analytics algorithm running on one or more surveillance cameras may be stored in a video analytics event log, and user interactions with a security panel (arm, disarm, bypass inputs) may be stored in a user interaction event log. Analyzing an operation of the security system often involves manually correlating events across different event logs. For example, if a manager wants to analyze the activity of a particular zone or a specific user across the intrusion event log and access event log for a particular week/month/year, the manager may have to manually identify and then correlate the events in the intrusion event log and access event log that correspond to the specific user and/or particular zone and that occurred during the last week/month/year. This can be tedious, time consuming and error prone. What would be desirable are ways to use generative artificial intelligence to summarize one or more operational characteristics of a security system.

SUMMARY

The present disclosure relates generally to security systems and more particularly to using generative artificial intelligence to summarize one or more operational characteristics of a security system. An example may be found in a method for determining one or more summarized operational characteristics of a security system based at least in part on two or more log entries captured in one or more event logs of the security system. The illustrative method includes receiving a natural language query from a user requesting one or more summarized operational characteristics of the security system. The natural language query is submitted to a Generative Artificial Intelligence (Gen-AI) model. The Gen-AI model identifies two or more log entries captured in the one or more event logs that are relevant to calculating the one or more summarized operational characteristics of the security system and calculates the one or more summarized operational characteristics of the security system based at least in part on the identified two or more log entries. The method includes reporting a summary that includes the one or more summarized operational characteristics of the security system to the user.

Another example may be found in a security system. The illustrative security system includes a user interface, one or more memories for storing one or more event logs that each include one or more log entries that each log an event occurring in the security system, and a controller that is operatively coupled to the user interface and the one or more memories. The controller is configured to receive from the user interface a natural language query from a user requesting one or more summarized operational characteristics of the security system and to submit the natural language query to a Generative Artificial Intelligence (Gen-AI) model. The Gen-AI model identifies two or more log entries captured in the one or more event logs that are relevant to calculating the one or more summarized operational characteristics of the security system and calculates the one or more summarized operational characteristics of the security system based at least in part on the identified two or more log entries. The controller stores a summary that includes the one or more summarized operational characteristics of the security system to the user.

Another example may be found in a non-transitory computer readable medium storing instructions. When the instructions are executed by one or more processors, the one or more processors are caused to receive from a user interface a natural language query from a user requesting one or more summarized operational characteristics of a security system and to submit the natural language query to a Generative Artificial Intelligence (Gen-AI) model. The Gen-AI model identifies two or more log entries captured in one or more event logs that are relevant to calculating the one or more summarized operational characteristics of the security system and calculates the one or more summarized operational characteristics of the security system based at least in part on the identified two or more log entries. The Gen-AI model stores a summary that includes the one or more summarized operational characteristics of the security system to the user.

The preceding summary is provided to facilitate an understanding of some of the innovative features unique to the present disclosure and is not intended to be a full description. A full appreciation of the disclosure can be gained by taking the entire specification, claims, figures, and abstract as a whole.

BRIEF DESCRIPTION OF THE FIGURES

The disclosure may be more completely understood in consideration of the following description of various examples in connection with the accompanying drawings, in which:

> Figure 1 is a schematic block diagram showing an illustrative security system;
> Figure 2 is a flow diagram showing an illustrative method;
> Figure 3 is a flow diagram showing an illustrative series of steps that may be carried out by one or more processors executing stored instructions;
> Figure 4 is an illustrative workflow example;
> Figure 5 is an illustrative workflow example; and
> Figure 6 is an illustrative workflow example.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

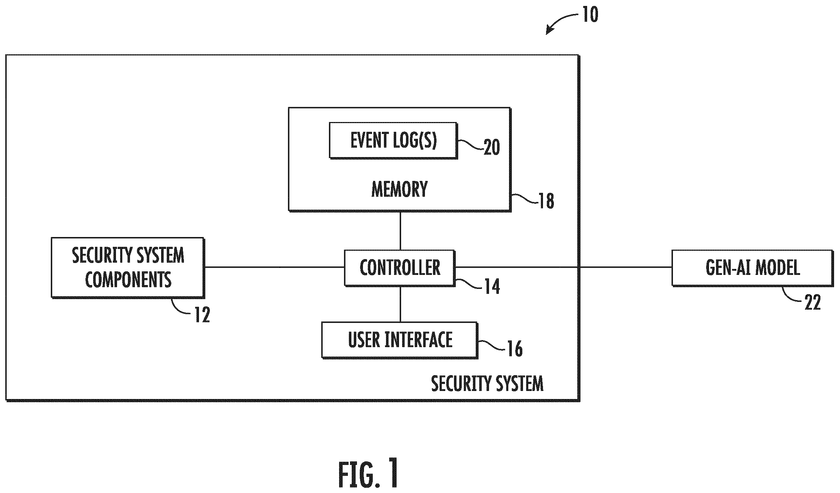

Figure 1 is a schematic block diagram showing an illustrative security system 10. The illustrative security system 10 may be deployed in any of a variety of different buildings and other facilities. The security system 10 includes a number of security system components 12. The security system components 12 may include a variety of security sensors, control panel(s), access control card readers, door lock actuators, and the like. The security sensors may include motion sensors such as PIR sensors, surveillance cameras, door contact sensors, window sensors, glass break sensors, smoke detectors and others. The security system components 12 may communicate with a controller 14. The controller 14 may be configured to receive signals from the security system components 12 and to ascertain whether an alarm should be raised. When the controller 14 determines that an alarm should be raised, the controller 14 raises an alarm. In some cases, the controller 14 may be configured to raise an alarm via a user interface 16. In some cases, the controller 14 may be configured to raise an alarm by remotely contacting the appropriate authorities such as police or fire, for example.

The security system 10 includes a memory 18 that stores one or more event logs 20. Each of the log entries log an event occurring in the security system 10. In some cases, log entries may correspond to logged events detected by the security system 10, such as an intrusion event, an access event, a video analytics event, and a user input event. As an example, the user input event may include one or more of an arming event that logs when a user arms the security system 10 and a disarming event that logs when the user disarms the security system 10. The user input event may include a bypass event wherein the user selects to bypass a particular sensor of zone. The user input event may an acknowledgement event that logs when a user acknowledges an alarm event.

In some cases, log entries may include one or more event parameters including an event type parameter and an event time stamp parameter. Examples of other event parameters may include one or more of a device identifier that identifies a device (such as one of the security system components 12) that is associated with the corresponding log entry, a user identifier that identifies a user that is associated with the corresponding log entry, a location within the facility that is associated with the corresponding log entry, a zone of the facility that is associated with the corresponding log entry, and diagnostic information that is associated with the corresponding log entry.

In the example shown, the controller 14 is operatively coupled with the user interface 16 and with the memory 18. The controller 14 may be configured to receive via the user interface 16 a natural language query from a user requesting one or more summarized operational characteristics of the security system 10 and to submit the natural language query to a Generative Artificial Intelligence (Gen-AI) model 22. In some cases, the natural language query may define a time period of interest, and the one or more summarized operational characteristics of the security system 10 may correspond to the time period of interest. In some cases, the natural language query may define a particular user of interest, and the one or more summarized operational characteristics of the security system 10 may correspond to the particular user of interest. In some cases, the natural language query may define a region of interest, and the one or more summarized operational characteristics of the security system 10 may correspond to the region of interest. These are just examples.

In some cases, the Gen-AI model 22 may be running in a remote computer such as a cloud-based server. The Gen-AI model 22 may be running locally, in some cases. In the example shown, the Gen-AI model 22 identifies two or more log entries captured in the one or more event logs 20 of the security system 10 that are relevant to calculating the one or more summarized operational characteristics of the security system 10, and then calculates the one or more summarized operational characteristics of the security system 10 based at least in part on the identified two or more log entries. In some cases, calculating the one or more summarized operational characteristics of the security system 10 may include one or more of calculating an average value, finding a maximum value, finding a minimum value. In some cases, calculating the one or more summarized operational characteristics of the security system 10 may include maintaining a count of the identified two or more log entries that occurred during a period of time defined by the natural language query. These are just examples.

The controller 14 is configured to then store a summary that includes the one or more summarized operational characteristics of the security system for the user. In some instances, the controller 14 may be configured to report the summary to the user in a natural language output generated by the Gen-AI model 22. In some cases, the user may have a first authority level selected from a plurality of authority levels, and a content of the summary may be different depending on the authority level of the user. In some cases, the controller 14 may be configured to identify two or more log entries captured in the one or more event logs 20 that are relevant to calculating the one or more summarized operational characteristics of the security system 10 and to calculate the one or more summarized operational characteristics of the security system 10 based at least in part on the identified two or more log entries.

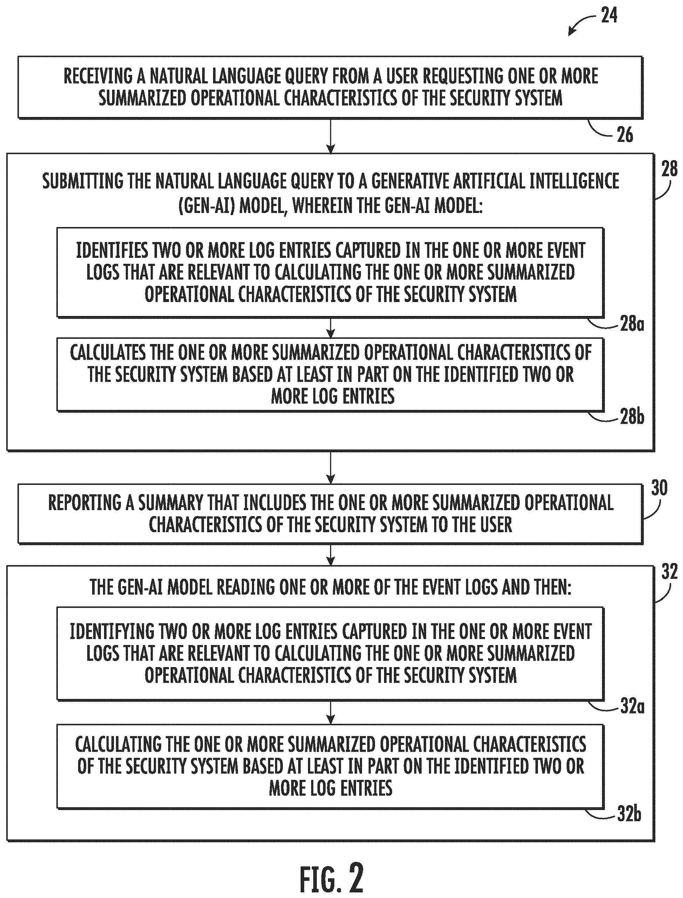

Figure 2 is a flow diagram showing an illustrative method 24 for determining one or more summarized operational characteristics of a security system (such as the security system 10) based at least in part on two or more log entries captured in one or more event logs (such as the event log(s) 20) of the security system. The method includes receiving a natural language query from a user requesting one or more summarized operational characteristics of the security system, as indicated at block 26. As an example, the natural language query may define a time period of interest, and wherein the one or more summarized operational characteristics of the security system correspond to the time period of interest. The natural language query is submitted to a Generative Artificial Intelligence (Gen-AI) model (such as the Gen-AI model 22), as indicated at block 28. The Gen-AI model identifies two or more log entries captured in the one or more event logs that are relevant to calculating the one or more summarized operational characteristics of the security system, as indicated at block 28a. The Gen-AI model calculates the one or more summarized operational characteristics of the security system based at least in part on the identified two or more log entries, as indicated at block 28b. As an example, calculating the one or more summarized operational characteristics of the security system may include one or more of calculating an average value, finding a maximum value, and finding a minimum value. As another example, calculating the one or more summarized operational characteristics of the security system may include maintaining a count of the identified two or more log entries that occurred during a period of time defined by the natural language query.

In some cases, the two or more log entries may correspond to logged events detected by the security system such as one or more of an intrusion event, an access event, a video analytics event, and a user input event. As an example, the user input event may include one or more of an arming event that logs when a user arms the security system, a disarming event that logs when the user disarms the security system and a bypass event that logs when the user bypasses a sensor or zone. In some cases, the two or more log entries may correspond to logged events detected by the security system such as an alarm event and a user input event, wherein the user input event includes an acknowledgement event that logs when a user acknowledges the alarm event. In some cases, each of the two or more log entries may include one or more event parameters including an event type parameter and an event time stamp parameter. The one or more event parameters may further include one or more of a device identifier that identifies a device that is associated with the corresponding log entry, a user identifier that identifies a user that is associated with the corresponding log entry, a location that is associated with the corresponding log entry, a zone that is associated with the corresponding log entry, and diagnostic information that is associated with the corresponding log entry. These are just examples.

A summary is reported that includes the one or more summarized operational characteristics of the security system to the user, as indicated at block 30. In some cases, the summary may be reported to the user in a natural language output generated by the Gen-AI model. In some cases, the user may have a first authority level selected from a plurality of authority levels, and a content of the summary may be different depending on the authority level of the user. For example, a user with a higher authority level may receive more detail and/or more confidential information in the generated summary than a user with a lower authority level.

In some cases, the security system may include a plurality of controllers each storing or accessing one or more of the event logs of the security system. The Gen-AI model may read one or more of the event logs of at least some of the plurality of controllers of the security system, as indicated at block 32. The Gen-AI model may identify two or more log entries captured in the one or more event logs that are relevant to calculating the one or more summarized operational characteristics of the security system, as indicated at block 32a. The Gen-AI model may calculate the one or more summarized operational characteristics of the security system based at least in part on the identified two or more log entries.

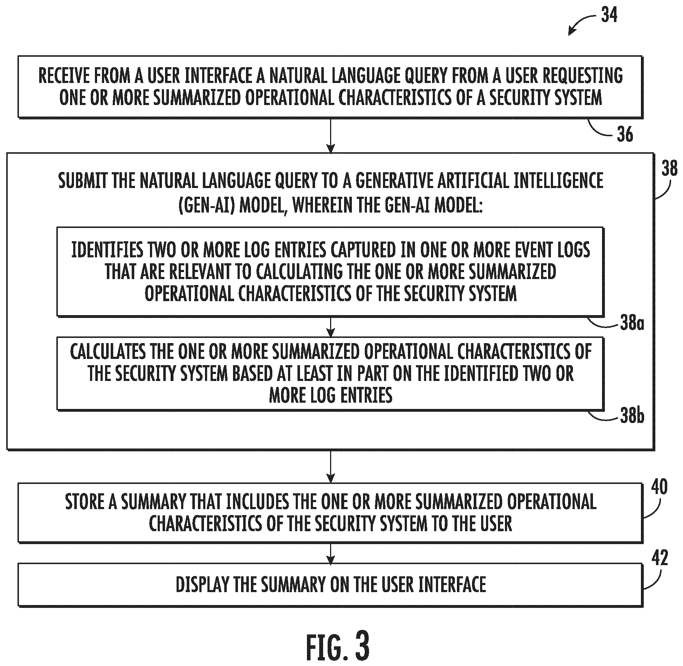

Figure 3 is a flow diagram showing an illustrative series of steps 34 that may be carried out by one or more processors that are executing instructions that are stored on a non-transient, computer readable storage medium. The one or more processors may be part of the controller 14, for example. The one or more processors may be caused to receive from a user interface a natural language query from a user requesting one or more summarized operational characteristics of a security system, as indicated at block 36. The natural language query may be submitted to a Generative Artificial Intelligence (Gen-AI) model, as indicated at block 38. The Gen-AI model identifies two or more log entries captured in one or more event logs that are relevant to calculating the one or more summarized operational characteristics of the security system, as indicated at block 38a. The Gen-AI model calculates the one or more summarized operational characteristics of the security system based at least in part on the identified two or more log entries, as indicated at block 38b. The one or more processors may be caused to store a summary that includes the one or more summarized operational characteristics of the security system to the user, as indicated at block 40. In some cases, the one or more processors are caused to display the summary on the user interface, as indicated at block 42.

In some cases, the two or more log entries may correspond to logged events detected by the security system, wherein the logged events include one or more of an intrusion event, an access event, a video analytics event, and a user input event. As an example, the user input event may include one or more of an arming event that logs when a user arms the security system and a disarming event that logs when the user disarms the security system.

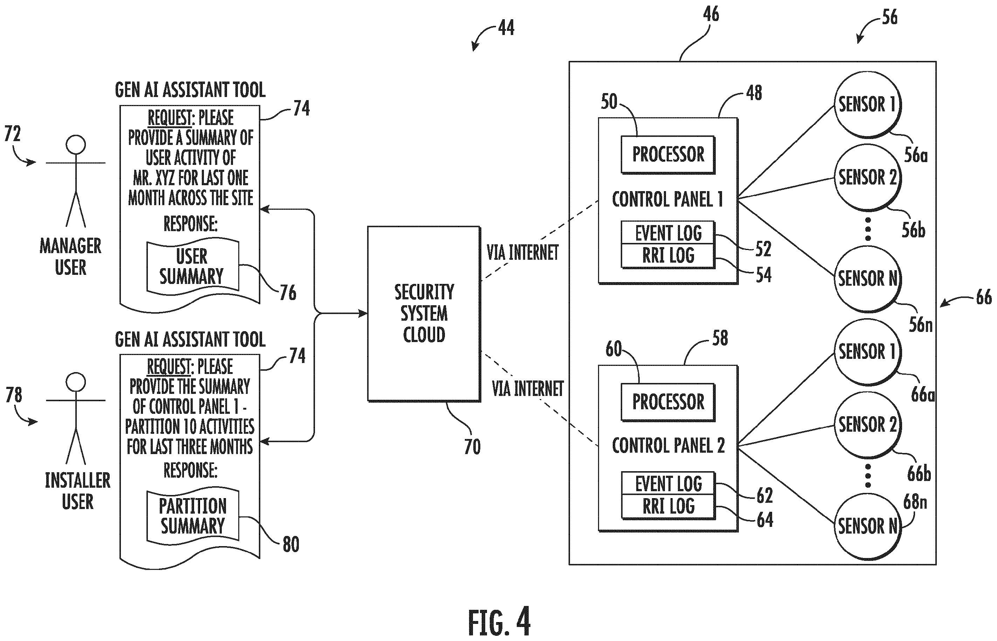

Figure 4 is an illustrative workflow 44, providing examples of how information may be requested and provided. A site 46, which may be a building or other facility, includes a control panel 48 having a processor 50, an event log 52 and an RRI (Remote Routine Inspection) log 54. The RRI log may capture deviations like maximum/minimum voltage reached, maximum/minimum zone resistance reached, etc., detected by a periodically executed diagnosis routine. The control panel 48 communicates with a number of sensors 56, individually labeled as 56a, 56b and through 56n. The site 46 may also include a control panel 58 having a processor 60, an event log 62 and an RRI log 64. The control panel 58 communicates with a number of sensors 66, individually labeled as 66a, 66b and through 66n. While two control panels 48 and 58 are shown, the site 46 may include any number of control panels, including a single control panel, or three or more control panels. In the example shown, the control panels 48 and 58 are connected over a network such as the Internet with a security system cloud 70.

In a first example, a manager 72 uses a Gen-AI assistant tool 74 to request a summary of a particular user's activities. The Gen-AI assistant tool 74 assembles and forwards the request to the security system cloud 70, which returns a user summary 76. In a second example, an installer 78 uses the Gen-AI assistant tool 74 to request a summary of activities for a particular partition for a particular control panel. The Gen-AI assistant tool 74 forwards the request to the security system cloud 70, which returns a partition summary 80.

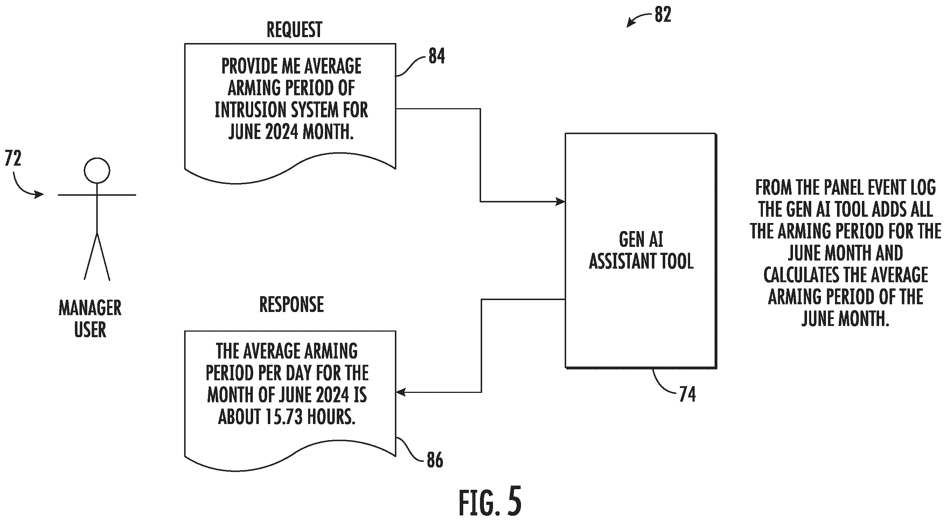

Figure 5 is an illustrative workflow 82. It will be appreciated that the Gen-AI assistant tool 74 will communicate with the site 46 (shown in Figure 4). The manager 72 provides a natural language request 84 regarding average arming times to the Gen-AI assistant tool 74. The Gen-AI assistant tool 74 communicates with the security system cloud 70 (Figure 4) to obtain the requested information from the appropriate log files, and returns a response 86 that provides a natural language answer to the question raised by the manager 72.

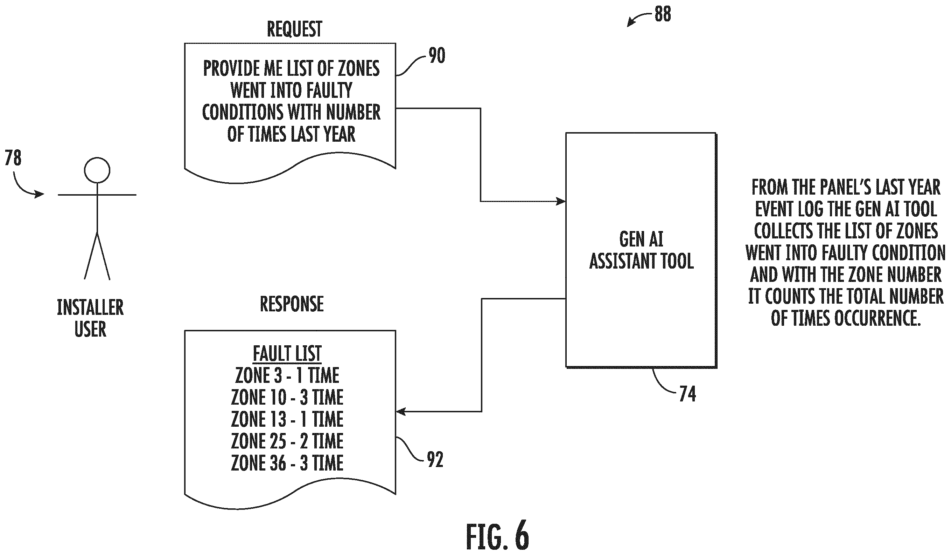

Figure 6 is an illustrative workflow 88. It will be appreciated that the Gen-AI assistant tool 74 will communicate with the site 46 (shown in Figure 4). The installer 78 provides a natural language request 90 regarding faulty zones to the Gen-AI assistant tool 74. The Gen-AI assistant tool 74 communicates with the security system cloud 70 (Figure 4) to obtain the requested information from the appropriate log files and returns a response 92 that provides a natural language answer to the question raised by the installer 78.

Figures 4 through 6 provide just a few examples of possible queries that may be posed. The following provides additional examples.

**Calculation of Average Arm Time per day for a month from Event log:**

Considering the intrusion system installed on a premises where arm and disarm operations are conducted in a specific manner, Generative AI Tool with Natural language Query can calculate the average arm time from the Event logs to assess secured premise operations.

**User Query to Gen AI Assistant Tool:**

Provide me the total average arm/disarm operations of intrusion system for June 2024 month.

**Gen AI Assistant tool Generated output:**

The Average arming period per day for the month of June 2024 is about 15.73 hours.

**Calculation performed by the Gen AI Assistant Tool in the background:**

Total Arming Time for working days is about 280 hours and total arming time for non-working/Holidays is about 192hrs, Total Disarming Time is about 248hours for working days and 0hrs for nonworking/Holidays in the month of June 2024 and Initialize arming Operations is about 22 times and Disarming Operations is about 22 times.

$$\text{Calculate average Arming Time} = \text{Total Arming Time for a month/ No of days in a month}$$

$$= 472 / 30$$

$$= \mathbf{15.73}$$

**Gen AI Assistant tool for the Intrusion system:**

Below are some of the examples which can be summarized with the support of Gen AI Assistant tool which in turn derives from the various Event logs:

1. Maximum of number of Arm operations per Day/Month/Quarterly/Mid-year/Yearly.
2. Number of days system remained in disarm condition (detailing the vulnerability risk to the premises).
3. What is the response time or actions time from the security team to address Intruder Alarm, Forced Door open alarm (Access), Fire Alarm, etc.
4. Number of attempts the user has made Arm operations outside normal arming hours/duration in a Month/-Quarter/Mid-Year/Yearly.
5. Number of attempts the user has made Disarm operations outside normal disarming hours/duration in a Month/-Quarter/Mid-Year/Yearly.
6. Assist with determining maximum number of alarms per day with categorizations/severity.
7. Assist with determining maximum number of zones had troubles and bypass operations per Month/Quarter/Mid-Year/Yearly.
8. Number of hours input power failed to the Panels and Power Supply unit details.
9. Provide the Alarm Receiver Center operational/downtime for a Month/Quarterly/Mid-Year/Yearly and insight on the month in which Alarm receiver was mostly prone with downtime.
10. Identify the Ethernet failure occurrence in a Month/Quarter/Mid-Year/Yearly and change over to the Cell radio during Ethernet failure.
11. Derive the Average and Range of cellular Data consumption for a Month/Quarterly/Mid-Year/Yearly.
12. Insights on Mode switch to Installer and their Most occurrence over the period for deriving installer visit to the site.

**Gen AI Assistant tool for the Video system:**

Similar to the intrusion system, the tool can be extended to use for video system to summarize the understanding of the system over the period of Month/Quarterly/Mid-Year/Yearly.

Below are some of the examples which can be summarized with the support of Gen AI Assistant tool which in turn derives from Event logs:

1. Number of camera(s) connect or disconnect from the Cloud or from the recorder per Day/Month/Quarterly/Mid-year/Yearly.
2. Recording hours of camera occurring in the recorder or the cloud.
3. Average recording hours per Day/Month/Quarterly/Mid-year/Yearly.
4. Maxima and minima of motion detection occurring in the overall system or per camera for per Day/Month/Quarterly/Mid-year/Yearly.
5. Maximum number of event detected by a camera over the period and their types per Day/Month/Quarterly/Mid-year/Yearly.

**Gen AI Assistant tool for the Access system:**

Similar to the intrusion and video system, the tool can be extended to use for Access system to summarize the understanding of the system over the period of Month/Quarterly/Mid-Year/Yearly.
Below are some of the examples which can be summarized with the support of Gen AI Assistant tool which in turn derives from Event logs:

1. Number of valid and invalid card swipe occurring per Day/Month/Quarterly/Mid-year/Yearly.
2. Which Day/Month/Quarterly/Mid-year/Yearly had a highest or maximum valid visitor card swipe.
3. User count practicing anti-pass back and tailgating per Day/Month/Quarterly/Mid-year/Yearly.
4. Invalid card swipe like expired and not enrolled card swipe per Day/Month/Quarterly/Mid-year/Yearly.
5. Number and type of user failing under Time Zone Violations per Day/Month/Quarterly/Mid-year/Yearly.
6. Average time the Door remained open during Emergency evacuation.

**Gen AI Assistant tool generating report as per user authority level:**

The summary report according to the user authority level can be generated with the help of Gen AI assistant tool. This will help to summarize the report and provide only the appropriate information to the authorized users and there by restricting user access as per their level.
Manager as user authority level will have access to the following samples:

1. Details about the number of Permission Group, Schedule, Holidays created and their insights like operational hours as per site location, user type access to the premises and their permission group details, etc. can be obtained.
2. As a manager level user. schedule of Auto Arm, Auto Disarm, Manual Arm, Manual, Disarm, Alarm Reset, Alarm restore detailed summary report can be obtained for a Month/Quarterly/Mid-year/Yearly.
3. As a manager level user, premises that is secured during normal arming hours can be obtained from the event list log.
4. As a manager level user, collective health of the system and peripherals can be obtained from the diagnosis data.
5. As a manager level user, system connectivity to the cloud, Alarm reporting center details can be obtained, facilitating an understanding of the system's operational availability over various periods such as monthly, quarterly, mid-year, and yearly.
6. As a manager level user, audit summary report can be obtained to have insights about the number of configuration changes, user permission, number user login, etc.
7. As a manager level user, system downtime due to various reasons like incoming supply voltage failure, network stability can be obtained for Month/Quarterly/Mid-year/Yearly.
8. As a manager level user, abnormal events like Forced door open, Intruder alarm, Life safety alarm, Tamper Alarm, Invalid card swipe and so on can be derived from the Gen AI assistant tool.
9. As a manager level user, number of alarms with respect to type and severity of the alarm reported to the alarm reporting center can be obtained in the summary report generated.
10. Detail like number of peripheral replaced for Month/Quarterly/Mid-year/Yearly can be obtained helping him to understand the system stability.

Installer as user authority level will have access to the following samples:

1. Installer will be able to obtain details like number of Firmware upgrade was completed in the system for Month/-Quarterly/Mid-year/Yearly.
2. As an installer user, he can obtain number times the same panel underwent Factory default/panel replacement and redownload configuration.
3. As an installer user, summarized report on the RF walk test, walk test, Seismic test and so on can be obtained supporting him to understand the health of the zone and peripherals and to ensure that routine inspections are conducted periodically.

4. As an installer user, access to the detailed diagnostics data are available to a level where installer can use to diagnose the health of the panel/peripherals/sensors.

5. As installer user, number of zones went to the trouble state, peripherals had tamper state, drastic change in signal strength of cell radio and RF sensors, and so on for Month/Quarterly/Mid-year/Yearly can be obtained.

6. As installer user, signal strength for cellular radio/RF sensors data trends over the period can be obtained.

7. Summary on the number of site addition, deletion, controller addition across site, controller replace across site, peripherals health status across site, etc. can be generated.

**Generating Diagnosis Template to train data over the period:**

The table below shows an example of diagnostic data specifications for certain diagnostic parameters of the security system 10. This diagnostic template may be provided to the Gen-AI model to train the Gen-AI model to learn what are acceptable ranges for certain diagnostic parameters of the security system 10. Armed with this information, the Gen-AI model may identify and report diagnostic parameters that fall outside of the acceptable range(s).

**Diagnostics Template:**

**Cell Radio:**

| Parameter | Good | Fair | Poor |
|---|---|---|---|
| RSSI (dBm) | -65 to -75 | -75 to -85 | < -85 |
| RSRQ (dB) | -6 to -10 | -6 to -10 | < -11 |

**Wired Zone Resistance Value in ohms:**

| Zone No | Normal | Min | Max |
|---|---|---|---|
| 1 | 1000 | 900 | 1100 |

**Wireless Zone Signal Strength:**

| Zone No | Normal | Min | Max |
|---|---|---|---|
| 11 | 7 | 4 | 10 |

**Controller Power:**

**Incoming Supply Voltage in Volts:**

| | Normal | Min | Max |
|---|---|---|---|
| | 13.8 | 12.5 | 14.3 |

**Load Current in Amps:**

| | Normal | Min | Max |
|---|---|---|---|
| | 1.95 | 0.9 | 4.5 |

**Aux Voltage in Volts:**

| | Normal | Min | Max |
|---|---|---|---|
| Aux-1 | 13.8 | 12.5 | 14.3 |
| Aux-2 | 13.8 | 12.5 | 14.3 |
| Aux-3 | 13.8 | 12.5 | 14.3 |

**Aux Load Current in Amps:**

| | Normal | Min | Max |
|---|---|---|---|
| Aux-1 | 0.6 | 0.3 | 1.5 |
| Aux-2 | 0.6 | 0.3 | 1.5 |
| Aux-3 | 0.75 | 0.3 | 1.5 |

**Battery Voltage in Volts:**

| | Normal | Min | Max |
|---|---|---|---|
| | 13 | 12.5 | 14 |

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

**Claims**

1. A method for determining one or more summarized operational characteristics of a security system (10) based at least in part on two or more log entries captured in one or more event logs (20) of the security system, the method comprising:

   receiving a natural language query from a user requesting one or more summarized operational characteristics of the security system;
   submitting the natural language query to a Generative Artificial Intelligence (Gen-AI) model (22), wherein the Gen-AI model:

   identifies two or more log entries captured in the one or more event logs that are relevant to calculating the one or more summarized operational characteristics of the security system; and
   calculates the one or more summarized operational characteristics of the security system based at least in part on the identified two or more log entries; and

   reporting a summary that includes the one or more summarized operational characteristics of the security system to the user.

2. The method of claim 1, wherein the two or more log entries correspond to logged events detected by the security system, wherein the logged events include one or more of an intrusion event, an access event, a video analytics event, and a user input event.

3. The method of claim 2, wherein the user input event includes one or more of an arming event that logs when a user arms the security system and a disarming event that logs when the user disarms the security system.

4. The method of claim 1, wherein the two or more log entries correspond to logged events detected by the security system, wherein the logged events include an alarm event and a user input event, wherein the user input event includes an acknowledgement event that logs when a user acknowledges the alarm event.

5. The method of any of claims 1-4, wherein the natural language query defines a time period of interest, and wherein the one or more summarized operational characteristics of the security system correspond to the time period of interest.

6. The method of any of claims 1-5, wherein each of the two or more log entries includes one or more event parameters including an event type parameter and an event time stamp parameter.

7. The method of claim 6, wherein the one or more event parameters further include one or more of a device identifier that identifies a device that is associated with the corresponding log entry, a user identifier that identifies a user that is associated with the corresponding log entry, a location that is associated with the corresponding log entry, a zone that is associated with the corresponding log entry, and diagnostic information that is associated with the corresponding log entry.

8. The method of any of claims 1-7, wherein the summary is reported to the user in a natural language output generated by the Gen-AI model.

9. The method of any of claims 1-8, wherein calculating the one or more summarized operational characteristics of the security system includes one or more of calculating an average value, finding a maximum value, finding a minimum value.

10. The method of any of claims 1-9, wherein calculating the one or more summarized operational characteristics of the security system includes maintaining a count of the identified two or more log entries that occurred during a period of time defined by the natural language query.

11. The method of any of claims 1-10, wherein the user has a first authority level selected from a plurality of authority levels, wherein a content of the summary is different depending on the authority level of the user.

12. The method of any of claims 1-11, wherein the security system includes a plurality of controllers each storing one or more of the event logs of the security system the Gen-AI model reading one or more of the event logs of at least some of the plurality of controllers of the security system, and then:

   identifying two or more log entries captured in the one or more event logs that are relevant to calculating the one or more summarized operational characteristics of the security system; and
   calculating the one or more summarized operational characteristics of the security system based at least in part on the identified two or more log entries.

13. A security system (10) comprising:

   a user interface (16);
   one or more memories (18) for storing one or more event logs (20) that each include one or more log entries that each log an event occurring in the security system;
   a controller (14) operatively coupled to the user interface and the one or more memories, the controller configured to:

      receive from the user interface a natural language query from a user requesting one or more summarized operational characteristics of the security system;
      submit the natural language query to a Generative Artificial Intelligence (Gen-AI) model (22), wherein the Gen-AI model:

         identifies two or more log entries captured in the one or more event logs that are relevant to calculating the one or more summarized operational characteristics of the security system;
         calculates the one or more summarized operational characteristics of the security system based at least in part on the identified two or more log entries; and

      store a summary that includes the one or more summarized operational characteristics of the security system to the user.

14. The security system of claim 13, wherein the two or more log entries correspond to logged events detected by the security system, wherein the logged events include one or more of an intrusion event, an access event, a video analytics event, and a user input event.

15. A non-transitory computer readable medium storing instructions that when executed by one or more processors causes the one or more processors to:

   receive from a user interface (16) a natural language query from a user requesting one or more summarized operational characteristics of a security system;
   submit the natural language query to a Generative Artificial Intelligence (Gen-AI) model (22), wherein the Gen-AI model:

      identifies two or more log entries captured in one or more event logs that are relevant to calculating the one or more summarized operational characteristics of the security system; and
      calculates the one or more summarized operational characteristics of the security system based at least in part on the identified two or more log entries; and

store a summary that includes the one or more summarized operational characteristics of the security system to the user.

FIG. 1

24

RECEIVING A NATURAL LANGUAGE QUERY FROM A USER REQUESTING ONE OR MORE SUMMARIZED OPERATIONAL CHARACTERISTICS OF THE SECURITY SYSTEM

26

SUBMITTING THE NATURAL LANGUAGE QUERY TO A GENERATIVE ARTIFICIAL INTELLIGENCE (GEN-AI) MODEL, WHEREIN THE GEN-AI MODEL: — 28

IDENTIFIES TWO OR MORE LOG ENTRIES CAPTURED IN THE ONE OR MORE EVENT LOGS THAT ARE RELEVANT TO CALCULATING THE ONE OR MORE SUMMARIZED OPERATIONAL CHARACTERISTICS OF THE SECURITY SYSTEM

28a

CALCULATES THE ONE OR MORE SUMMARIZED OPERATIONAL CHARACTERISTICS OF THE SECURITY SYSTEM BASED AT LEAST IN PART ON THE IDENTIFIED TWO OR MORE LOG ENTRIES

28b

REPORTING A SUMMARY THAT INCLUDES THE ONE OR MORE SUMMARIZED OPERATIONAL CHARACTERISTICS OF THE SECURITY SYSTEM TO THE USER — 30

THE GEN-AI MODEL READING ONE OR MORE OF THE EVENT LOGS AND THEN: — 32

IDENTIFYING TWO OR MORE LOG ENTRIES CAPTURED IN THE ONE OR MORE EVENT LOGS THAT ARE RELEVANT TO CALCULATING THE ONE OR MORE SUMMARIZED OPERATIONAL CHARACTERISTICS OF THE SECURITY SYSTEM

32a

CALCULATING THE ONE OR MORE SUMMARIZED OPERATIONAL CHARACTERISTICS OF THE SECURITY SYSTEM BASED AT LEAST IN PART ON THE IDENTIFIED TWO OR MORE LOG ENTRIES

32b

FIG. 2

34

RECEIVE FROM A USER INTERFACE A NATURAL LANGUAGE QUERY FROM A USER REQUESTING ONE OR MORE SUMMARIZED OPERATIONAL CHARACTERISTICS OF A SECURITY SYSTEM

36

SUBMIT THE NATURAL LANGUAGE QUERY TO A GENERATIVE ARTIFICIAL INTELLIGENCE (GEN-AI) MODEL, WHEREIN THE GEN-AI MODEL:

38

IDENTIFIES TWO OR MORE LOG ENTRIES CAPTURED IN ONE OR MORE EVENT LOGS THAT ARE RELEVANT TO CALCULATING THE ONE OR MORE SUMMARIZED OPERATIONAL CHARACTERISTICS OF THE SECURITY SYSTEM

38a

CALCULATES THE ONE OR MORE SUMMARIZED OPERATIONAL CHARACTERISTICS OF THE SECURITY SYSTEM BASED AT LEAST IN PART ON THE IDENTIFIED TWO OR MORE LOG ENTRIES

38b

STORE A SUMMARY THAT INCLUDES THE ONE OR MORE SUMMARIZED OPERATIONAL CHARACTERISTICS OF THE SECURITY SYSTEM TO THE USER

40

DISPLAY THE SUMMARY ON THE USER INTERFACE

42

FIG. 3

FIG. 4

FIG. 5

REQUEST

PROVIDE ME LIST OF ZONES
WENT INTO FAULTY
CONDITIONS WITH NUMBER
OF TIMES LAST YEAR

~90

78

INSTALLER
USER

~88

GEN AI
ASSISTANT TOOL

FROM THE PANEL'S LAST YEAR
EVENT LOG THE GEN AI TOOL
COLLECTS THE LIST OF ZONES
WENT INTO FAULTY CONDITION
AND WITH THE ZONE NUMBER
IT COUNTS THE TOTAL NUMBER
OF TIMES OCCURRENCE.

~74

RESPONSE

FAULT LIST
ZONE 3 - 1 TIME
ZONE 10 - 3 TIME
ZONE 13 - 1 TIME
ZONE 25 - 2 TIME
ZONE 36 - 3 TIME

~92

FIG. 6

EP 4 704 060 A1

Europäisches
Patentamt

European
Patent Office

Office européen
des brevets

# EUROPEAN SEARCH REPORT

**Application Number**

EP 25 19 6165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/355240 A1 (RAZAK ABDUL [IE] ET AL) 21 November 2019 (2019-11-21) <br> * paragraph [0005] - paragraph [0009] * <br> * paragraph [0096] - paragraph [0108] * <br> * claims 1,8,15 * <br> * figures * <br> ----- | 1-15 | INV. <br> G08B25/14 <br> G08B29/18 <br><br> ADD. <br> G08B25/00 |
| X | US 2019/272296 A1 (PRAKASH AMIT [US] ET AL) 5 September 2019 (2019-09-05) <br> * paragraph [0004] - paragraph [0005] * <br> * paragraph [0049] - paragraph [0106] * <br> * paragraph [0437] - paragraph [0506] * <br> * figures * <br> ----- | 1-15 | |
| X | US 2024/256582 A1 (JAIN ARVIND [US] ET AL) 1 August 2024 (2024-08-01) <br> * the whole document * <br> ----- | 1-15 | |

**TECHNICAL FIELDS SEARCHED (IPC)**

G08B

The present search report has been drawn up for all claims

| Place of search | Date of completion of the search | Examiner |
|---|---|---|
| Munich | 18 December 2025 | Königer, Axel |

EPO FORM 1503 03.82 (P04C01)

## ANNEX TO THE EUROPEAN SEARCH REPORT
## ON EUROPEAN PATENT APPLICATION NO.

EP 25 19 6165

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2025

| Patent document cited in search report | Publication date | Patent family member(s) | Publication date |
|---|---|---|---|
| US 2019355240 A1 | 21-11-2019 | NONE | |
| US 2019272296 A1 | 05-09-2019 | EP 3534272 A1 | 04-09-2019 |
| | | US 2019272296 A1 | 05-09-2019 |
| | | US 2022067104 A1 | 03-03-2022 |
| | | US 2024070204 A1 | 29-02-2024 |
| US 2024256582 A1 | 01-08-2024 | NONE | |

EPO FORM P0459

For more details about this annex : see Official Journal of the European Patent Office, No. 12/82